# EUROPÄISCHE PATENTSCHRIFT

(11) **EP 1 108 690 B1**
(45) Veröffentlichungstag und Bekanntmachung des Hinweises auf die Patenterteilung: **29.12.2004**
(21) Anmeldenummer: 00890337.9
(22) Anmeldetag: 13.11.2000
(51) Int. Cl.: C03B 33/07

(54) **Verfahren und Vorrichtung zum Durchtrennen von Folien in Verbundglas**
Method and apparatus for cutting foils in multilayer glass sheets
Procédé et appareil pour la coupe de films dans des feuilles de verre laminées

(30) Priorität: 13.12.1999 AT 209599; 01.02.2000 AT 1512000
(43) Veröffentlichungstag der Anmeldung: 20.06.2001
(73) Patentinhaber: Tecnopat AG, 9008 St. Gallen (CH)
(72) Erfinder: Lisec, Peter, 3363 Amstetten-Hausmening (AT)
(74) Vertreter: Beer, Manfred, Dipl.-Ing.

(56) Entgegenhaltungen:
- EP-A- 0 708 741
- AT-B- 403 688
- DE-A- 19 519 093

## Beschreibung

Die Erfindung betrifft ein Verfahren zum Durchtrennen einer Kunststofffolie in Verbundglas mit Hilfe einer Klinge mit den Merkmalen des einleitenden Teils von Anspruch 1. Die Erfindung betrifft auch eine zum Ausführen des Verfahrens geeignete Vorrichtung, die mit einer Klinge ausgestattet ist und welche die Merkmale des einleitenden Teils des Vorrichtungshauptanspruches 4 aufweist.

Vorrichtungen zum Trennen (Durchschneiden) der Folie von Verbundglas, wie sie beispielsweise aus der EP 0 708 741 B bekannt sind, sind Bestandteil von Vorrichtungen zum Teilen von Verbundglas und dienen dazu die Kunststofffolie, die zwischen den Scheiben von Verbundglas angeordnet ist, nach dem Brechen der beiden Scheiben und Auseinanderziehen derselben zu durchtrennen, um das Teilen von Verbundglas zu vervollständigen.

In der EP 0 708 741 B ist eine Trennvorrichtung mit einer Klinge für das Durchschneiden der Folie in Verbundglas beschrieben.

Die Klinge sitzt bei der bekannten Vorrichtung in einer Klingenhalterung, die entlang der Teilungslinie verfahrbar ist und um eine parallel zur Verfahrrichtung ausgerichtete Achse verschwenkbar ist. Bei der bekannten Trennvorrichtung ist die Klinge mit einer geraden Schneidkante ausgebildet und in einem Klemmblock befestigt. Damit die Klinge auch sicher in dem Spalt zwischen den Teilen des Verbundglases geführt wird, wenn die Folie durchtrennt wird, ist vor der Klinge eine Führungsscheibe vorgesehen, die in den Spalt zwischen den Scheiben eintaucht.

Problematisch bei der bekannten Vorrichtung ist es, daß sich Probleme insoferne ergeben können, als die Klinge nicht hinreichend tief in den Spalt zwischen den Scheiben eintaucht, um die Folie sicher zu durchtrennen, und daß die Klinge ungeachtet der Führungsscheibe an den Rändern der Glasscheiben, die den Spalt begrenzen, auflaufen kann und dabei beschädigt wird. Dies insbesondere bei einem unsauberen Bruch bzw. in den Spalt vorragenden Glasteilen.

Der Erfindung liegt die Aufgabe zugrunde, ein Verfahren und eine Vorrichtung der eingangs genannten Gattung anzugeben, welche die genannten Nachteile nicht aufweist.

Gelöst wird diese Aufgabe erfindungsgemäß mit einem Verfahren, das die Merkmale des Anspruches 1 aufweist und mit einer Vorrichtung, welche die Merkmale des Anspruches 4 aufweist.

Bevorzugte und vorteilhafte Ausgestaltungen der Erfindung sind Gegenstand der Unteransprüche.

Nach dem erfindungsgemäßen Verfahren kann wie folgt gearbeitet werden:

Die Klinge wird durch Bewegen des die Klinge haltenden Teils der Vorrichtung in Richtung auf das Verbundglas auf die Fläche der einen (der oberen oder der unteren) Scheibe des Verbundglases neben dem geöffneten Spalt aufgesetzt. Nun wird die Klinge durch seitliches Versetzen, insbesondere Verschwenken des Halteteils um die parallel zur Schneidrichtung ausgerichtete Achse, seitlich, d.h. quer zu dem Spalt verschoben, bis die Klinge in den Spalt eintaucht. Nun wird die Klinge weiter vorgeschoben (abgesenkt oder gehoben) und zwar so weit, bis eine Meßvorrichtung, z.B. ein Meßlineal feststellt, daß die Klinge hinreichend tief in den Spalt bewegt worden ist, um die Folie auch sicher zu schneiden. Sobald dies geschehen ist, wird die Klinge entweder - wenn sie von oben auf die Folie einwirkt - durch ihr eigenes Gewicht und das des Halteteils nach unten gehalten, was gegebenenfalls durch einen (weiteren) Druckmittelzylinder unterstützt wird, oder - wenn die Klinge von unten her auf die Folie einwirkt - nach oben hin belastet, um sie in dem für das Durchschneiden der Folie wirksamen Eingriff mit der Folie zu halten und der Schneidvorgang kann beginnen.

Die erfindungsgemäße Verfahrensweise erlaubt es, die Klinge auch dann zuverlässig in den Spalt zwischen den beiden Teilen des Verbundglases einzutauchen, wenn das Verbundglas beispielsweise beim Brechen der beiden Glasscheiben sich in Richtung seiner Flächenerstreckung, beispielsweise quer zum Spalt gegenüber der ursprünglichen Lage, in der die Glasscheiben des Verbundglases geritzt worden sind, bewegt hat. So findet die Klinge den Spalt stets zuverlässig.

Mit Vorteil ist im Rahmen der Erfindung vorgesehen, daß zum seitlichen Verstellen der Klinge beim "Suchen" des Spaltes zwischen den Glasscheiben ein Druckmittelzylinder vorgesehen ist, der an dem verschwenkbaren Träger angreift.

Das Eintauchen der Klinge in den Spalt erfolgt vorzugsweise derart, daß eine parallelogrammlenkerartige Halterung für die Klinge betätigt wird. Der Zylinder zum Verstellen der Klinge in Anlage auf die Glasoberscheibe (und zum Abheben der Klinge) ist mit der Klingenhalterung beispielsweise so gekuppelt, daß die Klinge nicht mit Kraft gegen die Glasoberfläche gedrückt wird. Dies kann erreicht werden, indem zwischen der Klingenhalterung und dem Druckmittelzylinder bzw. dem Bauteil, an dem der Druckmittelzylinder angreift, eine Zapfen-Schlitz-Führung vorgesehen ist.

Die Ausbildung der Klinge, mit der das erfindungsgemäße Verfahren ausgeführt wird, ist an sich beliebig. So können auch Klingen mit gerader Schneidkante verwendet werden.

Bevorzugt wird im Rahmen der Erfindung eine kreisrunde Klinge verwendet, die es erlaubt, durch Verdrehen immer wieder scharfe Stellen der Klinge in Wirklage zu bringen. Gehalten wird die Klinge an dem Halteteil vorzugsweise mit Hilfe einer Klemmvorrichtung, die beispielsweise mit einer von Hand aus betätigten Knebelschraube ausgestattet ist.

Die erfindungsgemäße Vorrichtung zum Durchtrennen der Folie von Verbundglas kann bei an sich beliebig ausgestalteten Verbundglasschneidetischen verwendet werden. Beispiele für solche Verbundglasschneidetische sind in der EP 0 708 741 B, der AT 403 688 B und in der DE 195 19 093 A beschrieben. Teilweise kann die erfindungsgemäß vorgeschlagene Trennvorrichtung mit einer Klinge, die in älteren Vorschlägen vorgesehenen anderen Vorrichtungen zum Durchtrennen der Folie zwischen den Scheiben von Verbundglas ersetzen.

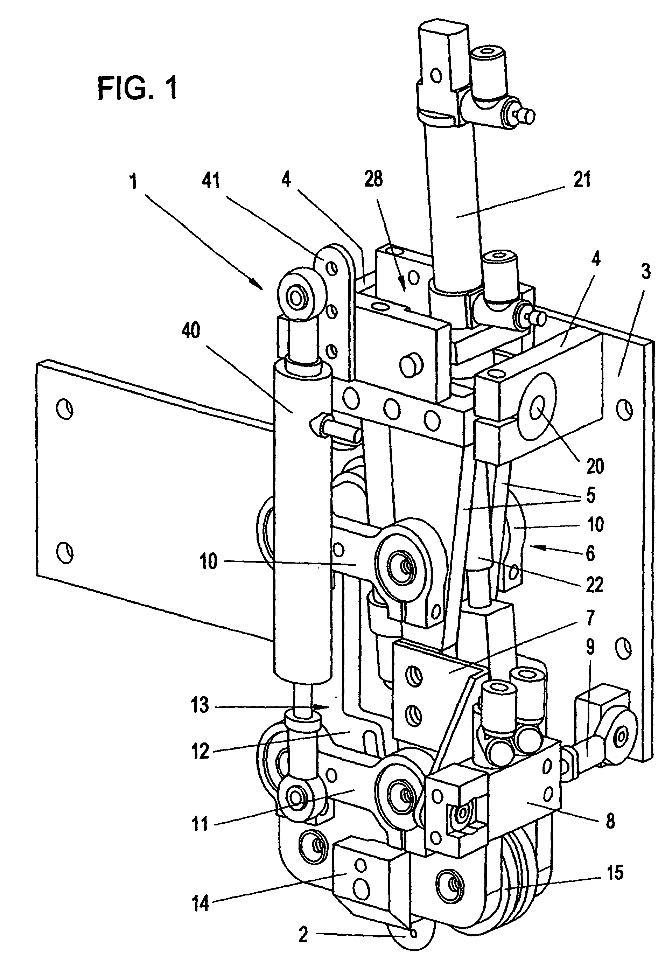

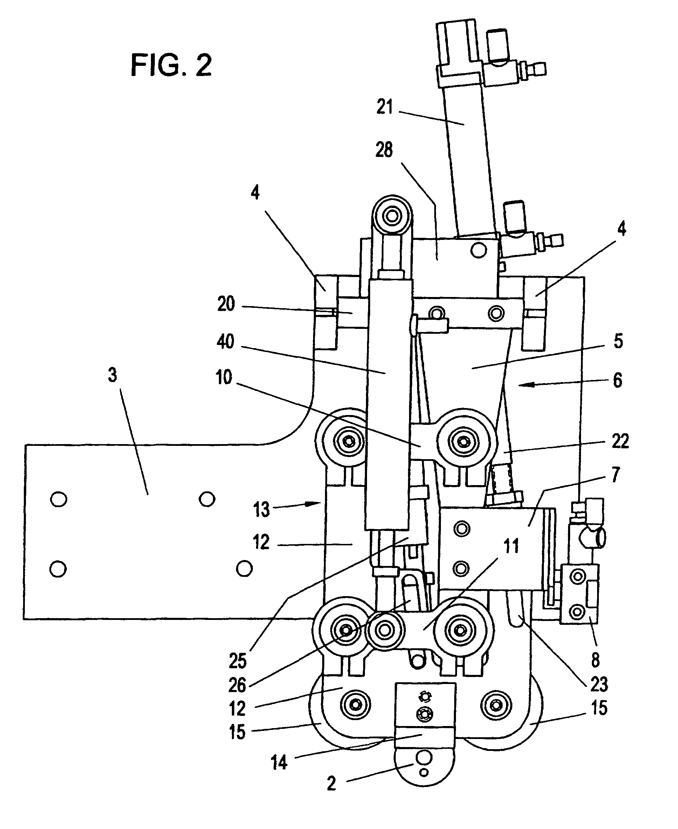

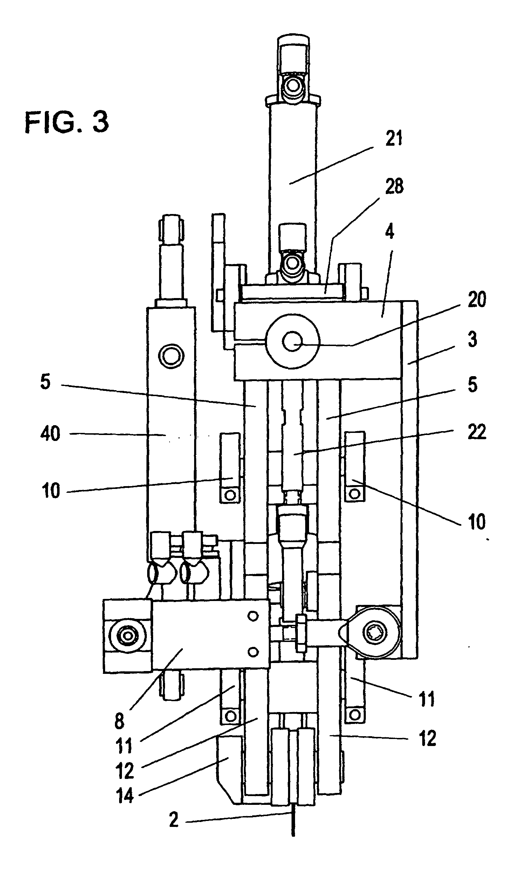

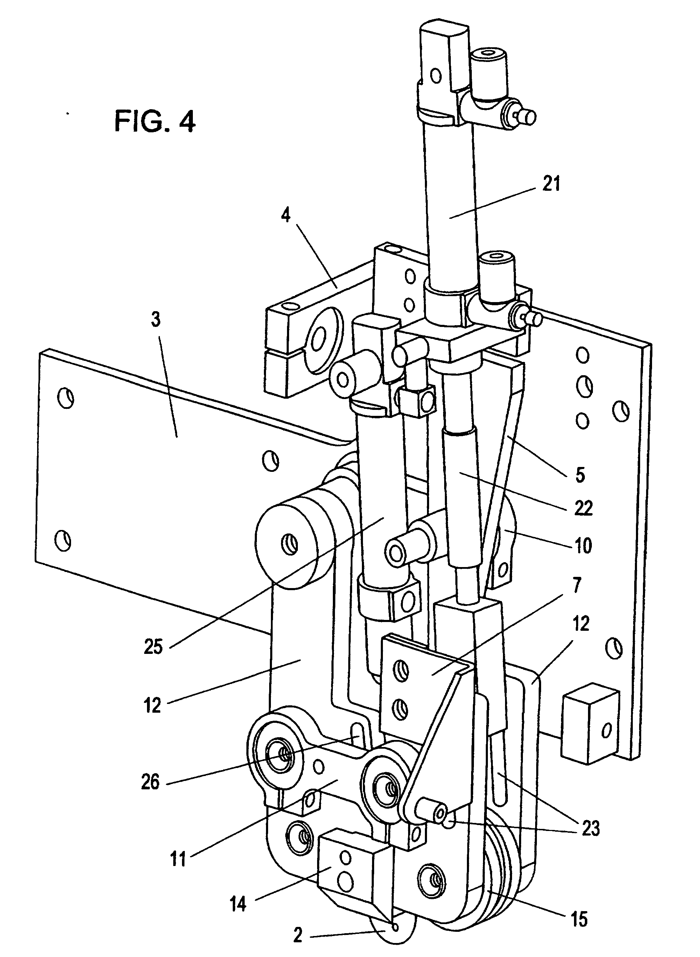

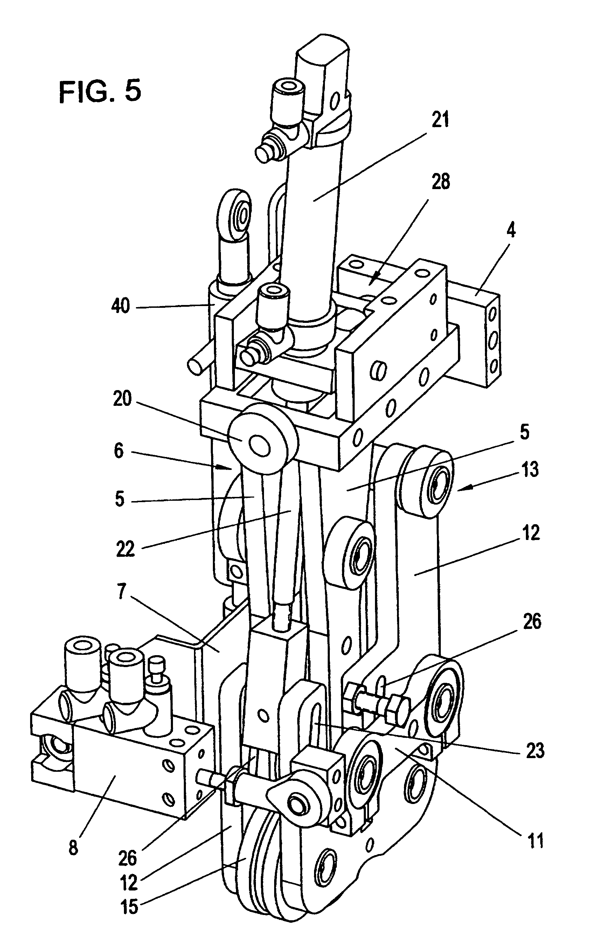

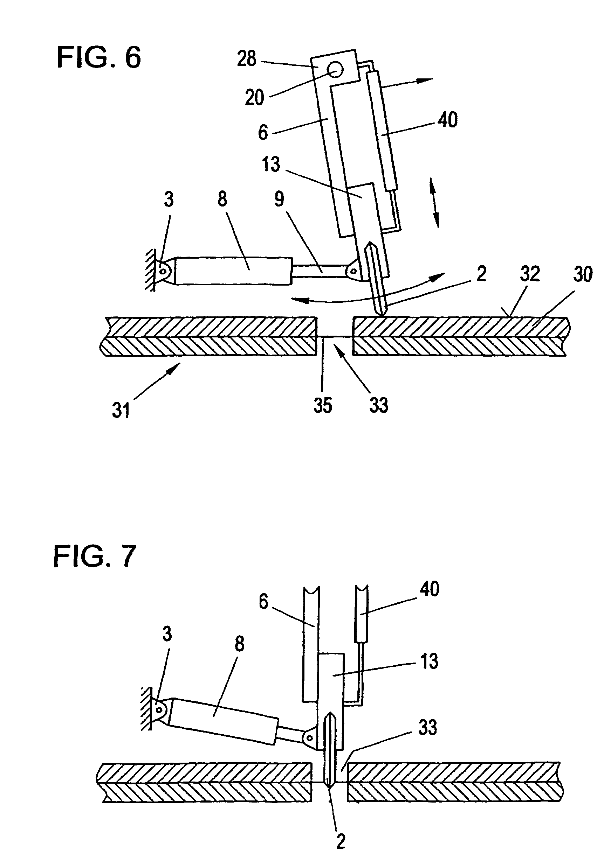

Weitere Einzelheiten und Merkmale der Erfindung ergeben sich aus der nachstehenden Beschreibung bevorzugter Ausführungsbeispiele, in der auf die angeschlossenen Zeichnungen Bezug genommen wird. In den Zeichnungen zeigt: Fig. 1 in Schrägansicht eine erfindungsgemäße Vorrichtung, Fig. 2 eine Seitenansicht hiezu, Fig. 3 eine Ansicht von links der Fig. 2 aus gesehen, Fig. 4 eine Ansicht ähnlich der von Fig. 1 bei abgenommenen Bauteilen, Fig. 5 eine Schrägansicht von links der Fig. 1 aus gesehen ohne Montageplatte und die Fig. 6 und 7 in zwei unterschiedlichen, stark schematisierten Darstellungen die erfindungsgemäße Vorrichtung in zwei Lagen bei ihrer Verwendung.

Wenngleich in dem nachstehend beschriebenen Ausführungsbeispiel die Klinge von oben her in die zu durchtrennende Folie von Verbundglas eingreift, ist auch eine Anordnung möglich und im Rahmen der Erfindung in Betracht gezogen, bei der die Klinge von unten her auf die Folie einwirkt, also die Halterung für die Klinge unterhalb der zu teilenden Verbundglasscheibe angeordnet ist.

Die in den Fig. 1 bis 5 gezeigte Halterung 1 für eine Schneidklinge 2 einer Vorrichtung zum Durchtrennen der Kunststofffolie in Verbundglas kann, wie dies beispielsweise aus der EP 0 708 741 B bekannt ist, an einer Führung quer über das Verbundglas verschiebbar geführt sein. Beispielsweise ist auf der Führung ein Schlitten verschiebbar, der neben der Halterung 1 für die Klinge 2 auch das Schneidrädchen bzw. dessen Halterung trägt, so daß ein Antrieb für das Bewegen des Schneidrädchens beim Ritzen der oberen Glasscheibe einerseits und der nach dem Öffnen des Spaltes nach dem Brechen der beiden Glasscheiben der Verbundglasscheibe eingesetzten Klinge 2 anderseits hinreicht.

Die Halterung 1 für die Schneidklinge 2 ist über eine Grundplatte 3 an dem quer über den Schneidtisch verfahrbaren Schlitten (nicht gezeigt) montiert. An zwei im oberen Bereich von der Grundplatte 3 abstehenden Auslegern 4 ist um eine horizontale Achse 20, die parallel zur Bewegungsrichtung bzw. parallel zur Schneidrichtung ausgerichtet ist, verschwenkbar ein Schwenkteil 28 befestigt, von dem ein aus zwei zueinander parallelen Platten 5 bestehender Träger 6 nach unten absteht. Zum Verschwenken des Trägers 6 ist an einer Platte 5 über einen Winkel 7 ein Druckmittelzylinder 8 befestigt, dessen Kolbenstange 9 an der Grundplatte 3 im unteren Bereich abgestützt ist.

An dem Träger 6 sind übereinander zwei Paare von Parallelogrammarmen 10, 11 um zueinander parallele, horizontale und quer zur Bewegungsrichtung ausgerichtete Achsen verschwenkbar gelagert. Die freien Enden dieser Parallelogrammarme 10 und 11 sind an einem aus zwei zueinander parallelen Platten 12 bestehenden Halteteil 13 befestigt, so daß dieser unter Verschwenken der Parallelogrammarme 10, 11 gegenüber dem Träger 6 auf und ab verstellbar ist.

In dem Halteteil 13 ist unten eine beispielsweise durch eine Knebelschraube (nicht gezeigt) betätigbare Klemme 14 für die im gezeigten Ausführungsbeispiel der Erfindung rund ausgebildete Schneidklinge 2 vorgesehen.

An dem Halteteil 13 sind unten, also vor und nach der Schneidklinge 2 Rollen 15 gesehen, die im Notfall auf der Oberseite 32 des zu teilenden Verbundglases 31 laufen, um eine Beschädigung der Halterung 1 bzw. eine Beschädigung des Verbundglases 31 zu vermeiden, wenn der Halteteil 13 der Klinge 2, aus welchem Grund immer, zu weit abgesenkt werden sollte. Es handelt sich also um Rollen 15 für den Notlauf.

An dem in einer in den Auslegern 4 gelagerten Achse 20 verschwenkbar gelagerten, die Platten 5 tragenden Schwenkteil 28 ist oben ein Druckmittelzylinder 21 abgestützt, dessen Kolbenstange 22 über Querstifte in Schlitze 23 in den Platten 12 des Halteteils 13 eingreift.

Ein weiterer Druckmittelzylinder 25, der im oberen Abschnitt des Trägers 6 abgestützt ist, also mit diesem verschwenkbar ist, greift mit einem Querstift in weitere Schlitze 26 in den Platten 12 des Halteteils 13 ein.

Durch Betätigen des Zylinders 21 im Sinne einer Verkürzung seiner wirksamen Länge (Einziehen seiner Kolbenstange 22) wird der Halteteil 13 unter Verschwenken der Parallelogrammlenker 10, 11 relativ zum Träger 6 angehoben, wobei in diesem Fall bereits vorher der Zylinder 25 in seine Stellung bewegt worden ist, in der sein Querstift an den oberen Enden oder im Bereich der oberen Enden der Schlitze 26 im Halteteil 13 aufgenommen ist.

Der Zylinder 21, der ein Antrieb ist, der ausschließlich zum Heben der Klinge 2 dient, also als Abhebe- bzw. Absenkzylinder wirkt, wird betätigt, um die Klinge 2 oberhalb des Verbundglases zu halten und, um die Klinge 2 auf die Oberseite 32 des Verbundglases 31 aufzusetzen. Dieser Zylinder 25 dient nicht dazu, die Klinge 2 gegen die obere Glasscheibe 30 oder die Folie 35, die durchtrennt werden soll, zu drücken. Wenn die Klinge 2 auf die obere Glasscheibe, so wie in Fig. 6 gezeigt, neben dem Spalt aufgesetzt ist, befinden sich die Stifte an der Kolbenstange 22 des Hebezylinders 21 und des Nachunten-Drück-Zylinders 25 jeweils etwa in der Mitte der Schlitze 23 bzw. 26 im Halteteil 13 (also im Abstand von beiden Enden der Schlitze 23 und 26), so daß die Klinge 2 zunächst lediglich unter ihrem eigenen Gewicht und dem Gewicht des sie tragenden Halteteils 13 nach unten belastet ist.

Durch Betätigen des Zylinders 8 zum seitlichen Verschwenken des Trägers 6 wird die Klinge 2 quer zur Richtung des Spaltes 33 verstellt, bis sie in diesen hineinfällt, wie in Fig. 7 gezeigt ist. Nun kann durch Nach-unten-Beaufschlagen des Nach-unten-Drück-Zylinders 25 dessen Kolbenstange so weit vorgeschoben werden, daß die an ihrem freien Ende befestigten Querstifte am unteren Ende der Schlitze 26 anliegen und die Klinge 2 zusätzlich nach unten belasten. So wird sichergestelt, daß die Klinge 2 beim Durchführen des Schneidvorganges insbesondere am Anfang desselben nicht aus der Kunststofffolie 35 hochläuft.

Im Prinzip ist es denkbar die Funktion der Zylinder 21 und 25 gegenüber der beschriebenen Funktion so abzuändern, daß der Zylinder 25 die Abhebe- und Absenkfunktion für die Klinge 2 übernimmt und der Zylinder 21 die Klinge 2 beim Schneiden der Folie 35 nach unten belastet.

Oft genügt aber die Belastung der Klinge 2 durch das Gewicht des Halteteils 13 allein, um das Durchtrennen der Folie 35 zuverlässig auszuführen, so daß nur ein Antrieb zum Abheben und Absenken des Halteteils 13 genügt, der Zylinder zum Belasten der Klinge 2 aber entbehrlich ist.

Zwischen dem um die Welle 20 verschwenkbaren Schwenkteil 28, also am oberen Ende des Trägers 6, ist an einer Lasche 41 das eine Ende eines Meßlineals 40 abgestützt. Das andere, untere Ende des Meßlineals 40 ist mit einem der Parallelogrammarme 10 oder 11 - im gezeigten Ausführungsbeispiel mit dem äußeren, unteren Parallelogrammlenkerarm 11 - verbunden. Das Meßlineal 40 ist somit in der Lage die Stellung des Halteteils 13 und damit die Stellung der an dem Halteteil 13 über die Klemmvorrichtung 14 befestigten Schneidklinge 2 zu erfassen. Des weiteren kann das Meßlineal 40 dazu herangezogen werden (wie noch später beschrieben wird), die Hubbewegungen der Schneidklinge 2 und die Lage der Schneidklinge 2, wenn sie auf die Oberseite 32 der oberen Scheibe 30 von Verbundglas 31 aufgesetzt ist, relativ zu einem (definierten) Nullpunkt zu erfassen.

In der Praxis kann mit der erfindungsgemäßen Vorrichtung wie folgt gearbeitet werden (vgl. Fig. 6 und 7):

Zunächst wird durch Ausfahren der Kolbenstange 22 des "Hebe- und Absenk"-Zylinders 21 der Halteteil 13 mit der Schneidklinge 2 auf die Oberseite 32 der oberen Glasscheibe 30 von Verbundglas 31 aufgesetzt, nachdem die Scheiben des Verbundglases nach dem Ritzen gebrochen und der Spalt 33 im Verbundglas 31 durch Auseinanderziehen der beiden Teile unter Erwärmen der dazwischen angeordneten Folie 35 mit Hilfe einer Heizvorrichtung 34 geöffnet worden ist.

Durch seitliches Bewegen der Schneidklinge 2 mit dem Zylinder 8 wird diese in den Spalt 33 bewegt und fällt unter ihrem eigenen Gewicht und dem des Halteteils 13 in den Spalt 33 hinein, bis sie die in Fig. 7 gezeigte Lage (neben der Folie 35 oder unter Durchtrennen des Anfanges der Folie 35) einnimmt. Das mit dem Halteteil 13 gekuppelte Meßlineal 40 stellt fest, ob die Klinge 2 so weit eingetaucht hat, daß sie auch tatsächlich in der Lage ist die Kunststofffolie 35 zu durchtrennen. Hiezu wird zunächst die Stellung der Klinge 2 gemäß Fig. 6 erfaßt und aus der so ermittelten Dicke des Verbundglases 31 die nötige Eintauchtiefe errechnet (meist die halbe Dicke der Verbundglasscheibe 31. Sobald die Klinge die in Fig. 7 gezeigte Stellung einnimmt, wird durch das Meßlineal 40 festgestellt, ob die Eintauchtiefe hinreicht und erst dann, wenn dies bestätigt worden ist, der Vorschubantrieb für die Halterung 1 für das Durchführen der Schneidarbeit mit Hilfe der Klinge 2 freigegeben.

Wenn die erfindungsgemäße Vorrichtung so angeordnet ist, daß die Klinge 2 von unten her in den Spalt 33 zwischen den beiden Teilen des Verbundglases 31 eintaucht, kann die Halterung sinngemäß so aufgebaut sein, wie dies zuvor anhand der Fig. 1 bis 5 für die Halterung 1 mit der von oben in den Spalt 33 eintauchenden Klinge 2 erläutert worden ist. In diesem Fall kann freilich der Halteteil 13 nicht gewichtsschwer ausgebildet sein, wie dies bei der Halterung 1 mit der von oben in den Spalt 33 eingreifenden Klinge 2 der Fall sein kann, sondern muß nach oben belastet sein. Hiezu können die für das Verstellen des Halteteils 13 für die Klinge 2 vorgesehenen Druckmittelzylinder 21 und/oder 25 herangezogen werden.

Auch bei einer von unten her in den Spalt 33 eintauchenden Klinge 2 kann sinngemäß so gearbeitet werden, wie dies anhand der Fig. 6 und 7 für die von oben her in den Spalt 33 eingreifende Klinge 2 beschrieben worden ist. Es wird zunächst die Klinge 2 neben dem Spalt 33 auf die Unterseite der unteren Scheibe des Verbundglases 31 aufgesetzt, dann quer zur Längserstreckung des Spaltes 33 verschoben, bis die Klinge 2 in den Spalt 33 eintaucht. Die erforderliche Eindringtiefe der Klinge 2 in den Spalt 33, die für das wirksame Durchtrennen der Folie 35 erforderlich ist, kann sinngemäß so wie dies für eine von oben her in den Spalt 33 eintauchende Klinge 2 anhand der Fig. 6 und 7 beschrieben worden ist, ermittelt werden.

Zusammenfassend kann ein bevorzugtes Ausführungsbeispiel der erfindungsgemäßen Vorrichtung wie folgt beschrieben werden:

Zum Durchtrennen einer Folie 35 zwischen den Scheiben von Verbundglas 31 im Bereich eines im Verbundglas 31 erzeugten Spaltes 33 wird eine an einer entlang des Spaltes 33 verfahrbaren Halterung 1 vorgesehene Klinge 2 verwendet. Die Halterung 1 besteht aus einem verschwenkbaren Träger 6, an dem höhenverstellbar ein Halteteil 13 für die Klinge 2 angeordnet ist. Die Klinge 2 wird zunächst neben dem Spalt 33 auf die Oberseite 32 der oberen Scheibe 30 des Verbundglases 31 aufgesetzt. Die Höhenausrichtung der Klinge 2 wird mit einem Meßlineal 40 zum Bestimmen der Stärke des Verbundglases 31 festgestellt. Dann wird die Halterung 6 von einem Motor 8 so verstellt, daß die Klinge 2 in den Spalt 33 fällt. Wenn über das Meßlineal 40 die hinreichende Eintauchtiefe der Klinge 2 in den Spalt 33 festgestellt wird, wird die Folie 35 geschnitten.

## Patentansprüche

1. Verfahren zum Durchtrennen einer Kunststofffolie (35) in Verbundglas (31) mit Hilfe einer Klinge (2), wobei die beiden Scheiben von Verbundglas (31) geritzt und gebrochen werden und die Teile des Verbundglases (31) auseinandergezogen werden, um zwischen den beiden Teilen des Verbundglases (31) einen Spalt (33) zu öffnen, in dem die zwischen den Scheiben des Verbundglases (31) angeordnete Folie (35) frei liegt, wobei die Klinge (2) in den Spalt (33) eingeführt und zum Durchtrennen der Folie (35) entlang des Spaltes (33) bewegt wird, **dadurch gekennzeichnet, daß** die Klinge (2) neben dem Spalt (33) auf das Verbundglas (31) aufgesetzt wird, daß die Klinge (2) dann quer zur Längserstreckung des Spaltes (33) zwischen den beiden Teilen des Verbundglases (31) in Richtung auf den Spalt (33) zu bewegt wird, bis sie im Bereich des Spaltes (33) anlangt, daß die Klinge (2) dann in den Spalt (33) hineinbewegt und so weit vorgeschoben wird, bis eine Meßvorrichtung (40) feststellt, dass die Klinge (2) für das Durchtrennen der Folie (35) hinreichend tief in den Spalt (33) bewegt worden ist, und daß die Klinge (2) schließlich zum Durchtrennen der Folie (35) entlang des Spaltes (33) bewegt wird, wobei die Tiefe des Eindringens der Klinge (2) in den Spalt (33) zwischen den Teilen des Verbundglases (31) überwacht wird.

2. Verfahren nach Anspruch 1, **dadurch gekennzeichnet, daß** die Lage der auf das Verbundglas (31) aufgesetzten Klinge (2) erfaßt wird, daß aus dieser Lage die Dicke des Verbundglases (31) ermittelt wird, und daß aus der so ermittelten Dicke des Verbundglases (31) die erforderliche Eindringtiefe der Klinge (2) in den Spalt (33) zwischen den Teilen des Verbundglases ermittelt wird.

3. Verfahren nach Anspruch 2, **dadurch gekennzeichnet, daß** die Stärke des Verbundglases (31) durch die Lage der neben dem Spalt (33) auf das Verbundglas (31) aufgesetzten Klinge (2) und der Lage der der Klinge (2) gegenüberliegenden Fläche des Verbundglases (31) als definierten Nullpunkt ermittelt wird.

4. Vorrichtung zum Durchtrennen der Kunststofffolie (35) in Verbundglas (31) mit Hilfe einer Klinge (2), die an einer um eine zum Spalt (33) zwischen den Teilen des Verbundglases (31) parallele Achse (20) verschwenkbar gelagerten Halterung (1) angebracht ist und die entlang des Spaltes (33) verfahrbar ist, insbesondere zum Durchführen des Verfahrens nach einem der Ansprüche 1 bis 3, **dadurch gekennzeichnet, daß** die Halterung (1) für die Klinge (2) quer zum Verbundglas (31) frei beweglich ist, daß ein Antrieb (8) zum Verschwenken der Halterung (1) mit der Klinge (2) um die Achse (20), um welche die Halterung (1) verschwenkbar gelagert ist, vorgesehen ist, daß ein die Klinge (2) tragender Halteteil (13) gegenüber einem Träger (6), der an einer Grundplatte (3) der Halterung (1) pendelnd aufgehängt ist, höhenverstellbar ist und daß an der Halterung (1) eine Meßvorrichtung (40) zum Erfassen und Überwachen der Stellung der Klinge (2) angeordnet ist.

5. Vorrichtung nach Anspruch 4, **dadurch gekennzeichnet, daß** der Antrieb ein doppelt wirkender Druckmittelmotor (8) ist.

6. Vorrichtung nach Anspruch 5, **dadurch gekennzeichnet, daß** der Druckmittelmotor (8) ein Druckluftzylinder ist.

7. Vorrichtung nach Anspruch 4, **dadurch gekennzeichnet, daß** der Halteteil (13) mit dem Träger (6) parallelogrammartig gekuppelt ist.

8. Vorrichtung nach Anspruch 4 oder 7, **dadurch gekennzeichnet, daß** der Träger (6) zwei von einem an der Achse (20) gelagerten Schwenkteil (28) nach unten weisende Platten (5) aufweist.

9. Vorrichtung nach einem der Ansprüche 4 bis 8, **dadurch gekennzeichnet, daß** zur verstellbaren Verbindung zwischen Träger (6) und Halteteil (13) vier Parallelogrammarme (10, 11) vorgesehen sind.

10. Vorrichtung nach einem der Ansprüche 4 bis 9, **dadurch gekennzeichnet, daß** an dem Schwenkteil (28) des Trägers (6) ein Druckmittelmotor (21) abgestützt ist, der mit dem Halteteil (13) gekuppelt ist.

11. Vorrichtung nach einem der Ansprüche 4 bis 10, **dadurch gekennzeichnet, daß** das freie Ende der Kolbenstange (22) des Druckmittelmotors (21) über eine Schlitz (23)-Zapfen-Kupplung mit dem Halteteil (13) gekuppelt ist.

12. Vorrichtung nach Anspruch 11, **dadurch gekennzeichnet, daß** der Zylinder (21) ausschließlich zum Anheben/Absenken des Halteteils (13) gegenüber dem Träger (6) bestimmt ist.

13. Vorrichtung nach einem der Ansprüche 4 bis 12, **dadurch gekennzeichnet, daß** ein weiterer Druckmittelmotor (25) vorgesehen ist, der am Schwenkteil (28) abgestützt und mit dem Halteteil (13) gekuppelt ist.

14. Vorrichtung nach Anspruch 13, **dadurch gekennzeichnet, daß** der weitere Zylinder (25) im Bereich seiner Kolbenstange über eine Zapfen-Schlitz (26)-Kupplung mit dem Halteteil (13) gekuppelt ist.

15. Vorrichtung nach Anspruch 13 oder 14, **dadurch gekennzeichnet, daß** der weitere Zylinder (25) ausschließlich zum Belasten des Halteteils (13) nach unten bestimmt ist.

16. Vorrichtung nach einem der Ansprüche 4 bis 15, **dadurch gekennzeichnet, daß** am Halteteil (13) vor und hinter der Klinge (2) Laufrollen (15) verdrehbar gelagert sind.

17. Vorrichtung nach einem der Ansprüche 4 bis 16, **dadurch gekennzeichnet, daß** als Meßvorrichtung zwischen Träger (6) und Halteteil (13) ein Meßlineal (40) vorgesehen ist.

18. Vorrichtung nach Anspruch 17, **dadurch gekennzeichnet, daß** das Meßlineal (40) mit einem Ende am Schwenkteil (28) des Halteteils (6) und mit seinem anderen Ende am Halteteil (13) abgestützt ist.

19. Vorrichtung nach Anspruch 18, **dadurch gekennzeichnet, daß** das eine Ende des Meßlineals (40) an einem der Parallelogrammlenkerarme (10, 11) gekuppelt ist.

20. Vorrichtung nach einem der Ansprüche 4 bis 19, **dadurch gekennzeichnet, daß** die Klinge (2) eine kreisrunde Klinge ist.

21. Vorrichtung nach einem der Ansprüche 4 bis 20, **dadurch gekennzeichnet, daß** die Klinge (2) durch einen Klemmblock (14) am Halteteil (13) befestigt ist.

22. Vorrichtung nach einem der Ansprüche 11 bis 21, **dadurch gekennzeichnet, daß** der Halteteil (13) in der Wirkstellung der Klinge (2) zu dem zum Anheben/Absenken des Halteteils (13) bestimmten Zylinder (21) frei beweglich ist, indem der Querstift am Ende der Kolbenstange (22) im Abstand von beiden Enden der Schlitze (23) im Halteteil (13) angeordnet ist.

## Claims

1. Process for cutting through a plastic film (35) in laminated glass (31) using a blade (2), the two panes of laminated glass (31) being scratched and broken and the parts of the laminated glass (31) being pulled apart to open between the two parts of the laminated glass (31) a gap (33) in which the film (35) which is located between the panes of laminated glass (31) lies freely, the blade (2) being inserted into the gap (33) and being moved to cut through the film (35) along the gap (33), **characterized in that** the blade (2) is placed next to the gap (33) on the laminated glass (31), that the blade (2) is then moved transversely to the lengthwise extension of the gap (33) between the two parts of the laminated glass (31) in the direction towards the gap (33) until it reaches the area of the gap (33), that the blade (2) is then moved into the gap (33) that the blade (2) is advanced until a measuring means (40) determines that the blade (2) penetrates the gap (33) sufficiently deep for cutting through the the film (35) and that the blade (2) finally is moved along the gap (33) to cut through the film (35), whereby the penetration depth of the blade (2) into the gap (33) between the parts of the laminated glass (31) is monitored.

2. Process according to claim 1, charcterized in that the location of the blade (2) which has been placed on the laminated glass (31) is acquired, that from this location the thickness of the laminated glass (31) is determined, and that from the thickness of the laminated glass (31) determined in this way the required penetration depth of the blade (2) into the gap (33) between the parts of the laminated glass is monitored.

3. Process according to claim 2, **characterized in that** the thickness of the laminated glass (31) is determined by the location of the blade (2) which has been placed on the laminated glass (31) next to the gap (33) and the location of the surface of the laminated glass (31) opposite the blade (2)as the defined zero point is determined

4. Device for cutting through of the plastic film (35) in laminated glass (31) using a blade (2) which mounted on an holding device (1), which is sivel-mounted around an axle (20) which is parallel to the gap (33) between the parts of the laminated glass (31) and which blade (2) can be moved along the gap (33), especially for carrying out the process as claimed in one of claims 1 to 3, charcterized in that the holding device (1) for the blade (2) is movable freely perpendcular to the laminated glass (31) that a drive (8) is provided for swivelling the holding device (1) with the blade (2) around the axle (20) around which the holding device (1) is swivel-mounted, that a holding part (13) which bears the blade (2) is vertically adjustable relative to a carrier (6) which is suspended pendulous on a base plate (3) of the holding device (1), relative to the carrier (6) and that a measuring means (40) for determining and monitoring the position of the blade (2) is provided.

5. Device according to claim 4, **characterized in that** the drive is a double-acting pressurized medium motor (8).

6. Device as claimed in claim 5, **characterized in that** the pressurized medium motor (8) is a compressed air cylinder.

7. Device as claimed in claim 4, **characterized in that** the holding part (13) is coupled to the carrier (6) in the manner of a parallelogram.

8. Device as claimed in claim 4 or 7,**characterized in that** the carrier (6) has two plates (5) which point down from a swivelling part (28) which is mounted on a axle (20).

9. Device as claimed in one of claims 4 to 8, **characterized in that** there are four parallelogram arms (10, 11) for adjustable connection between the carrier (6) and the holding part (13).

10. Device as claimed in one of claims 4 to 8,**characterized in that** on the swivelling part (28) of the carrier (6) a pressurized medium motor (21) is supported which is coupled to the holding part (13).

11. Device as claimed in one of claims 4 to 10, wherein the free end of the piston rod (22) of the pressurized medium motor (21) is coupled to the holding part (13) via a slot (23)-peg coupling.

12. Device as claimed in claim 11, wherein the cylinder (21) is intended solely for raising/lowering the holding part (13) relative to the carrier (6).

13. Device as claimed in one of claims 4 to 12, wherein there is another pressurized medium motor (25) which is supported on the swivelling part (28) and is coupled to the holding part (13).

14. Device as claimed in claim 13, wherein the other cylinder (25) in the area of its piston rod is coupled to the holding part (13) via a peg-slot (26) coupling.

15. Device as claimed in claim 13 or 14, wherein the other cylinder (25) is designed solely for loading the holding part (13) downward.

16. Device as claimed in one of claims 4 to 15, wherein on the holding part (13) rollers (15) are mounted to be able to turn in front of and behind the blade (2).

17. Device as claimed in one of claims 4 to 16, wherein as measuring means between the carrier (6) and the holding part (13) there is a rule (40).

18. Device as claimed in claim 17, wherein the rule (40) is supported with one end on the swivelling part (28) of the holding part (6) and with its other end on the holding part (13).

19. Device as claimed in claim 18, wherein one end of the rule (40) is coupled to one of the parallelogram rod arms (10, 11).

20. Device as claimed in one of claims 4 to 19, wherein the blade (2) is a circular blade.

21. Device as claimed in one of claims 4 to 20, wherein the blade (2) is mounted on the holding part (13) by a clamp block (14).

22. Device as claimed in one of claims 11 to 21, wherein the holding part (13) is freely movable in the working position of the blade (2) to the cylinder (21) which is designed for lifting/lowering the holding part (13) by the transverse pin on the end of the piston rod (22) being located at a distance from the two ends of the slots (23) in the holding part (13).

## Revendications

1. Procédé pour couper une feuille de matière plastique (1) dans un verre laminé (3) au moyen d'une lame (2), les deux vitres du verre laminé (31) étant incisées et rompues et les parties du verre laminé (31) sont étirées l'une par rapport à l'autre, de manière à ouvrir entre ces deux parties une fente (33) dans laquelle se trouve libre la feuille (35) située entre les vitres du verre laminé (31), la lame (2) étant introduite dans la fente (33) et déplacée le long de celle-ci pour couper la feuille (35), **caractérisé en ce que**
- la lame (2) est placée à côté de la fente (33) sur le verre laminé (31),
- la lame (2) est alors déplacée perpendiculairement à la direction longitudinale de la fente (33) entre les deux parties du verre laminé (31) en direction de la fente (33) jusqu'à ce qu'elle arrive dans la zone de la fente (33),
- la lame (2) est alors déplacée dans la fente (33) en étant glissée en avant jusqu'à ce qu'un dispositif de mesure (40) détermine que la lame (2) a été déplacée suffisamment profondément dans la fente (33) pour couper la feuille (35),
- ensuite, pour couper la feuille (35) la lame (2) est déplacée le long de la fente (33), la profondeur d'enfoncement de la lame (2) dans la fente (33) entre les parties du verre laminé (31) étant surveillée.

2. Procédé selon la revendication 1, **caractérisé en ce que** la position de la lame (2) posée sur le verre laminé (1) est détectée, l'épaisseur du verre laminé (31) est déterminée à partir de cette position et la profondeur d'enfoncement nécessaire de la lame (2) dans la fente (33) entre les parties du verre laminé est définie à partir de l'épaisseur déterminée du verre laminé (31).

3. Procédé selon la revendication 2, **caractérisé en ce que** l'épaisseur du verre laminé (31) est déterminée par la position de la lame (2) posée sur ce verre à côté de la fente (33), la position de la face de ce verre située à l'opposé de la lame (2) étant établie comme déterminant le point zéro.

4. Dispositif pour couper la feuille de matière plastique (13) dans un verre laminé (31) à l'aide d'une lame (2) qui est montée sur un support (1) pouvant basculer autour d'un axe (20) parallèle à la fente (33) entre les parties du verre laminé (31) et qui peut se déplacer le long de cette fente (33) notamment pour mettre en oeuvre une des revendications 1 à 3, **caractérisé en ce que**
- le support (1) de la lame (2) peut se déplacer librement, perpendiculairement au verre laminé (31),
- un entraînement (8) est prévu pour faire basculer le support (1) avec la lame (2) autour de l'axe (20) autour duquel le support (1) peut basculer,
- une partie porteuse (13) portant la lame (2) est réglable en hauteur par rapport à un support (6) qui est suspendue de manière pendulaire à une plaque de base (3) du support (1),
- sur le support (1) est monté un dispositif de mesure (40) pour détecter et surveiller la position de la lame (2).

5. Dispositif selon la revendication 4, **caractérisé en ce que** l'entraînement est assuré par un moteur à agent de pression à double effet.

6. Dispositif selon la revendication 5, **caractérisé en ce que** le moteur à agent de pression est un vérin à air comprimé.

7. Dispositif selon la revendication 4, **caractérisé en ce que** la partie de maintien (13) est accouplée au support (6) à la manière d'un parallélélogramme.

8. Dispositif selon la revendication 4 ou 7, **caractérisé en ce que** le support (6) présente deux plaques (5) dirigées vers le bas et issues d'une partie basculante (28) montée sur l'axe (20).

9. Dispositif selon une des revendications 4 à 8, **caractérisé en ce qu'**il est prévu quatre bras de parallélélogramme (10, 11) pour assurer une liaison mobile entre le support (6) et la partie de maintien (13).

10. Dispositif selon une des revendications 4 à 9, **caractérisé en ce que** sur la partie basculante (28) du support (6) s'appuie un moteur à agent de pression (21) qui est accouplé à la partie de maintien (13).

11. Dispositif selon une des revendications 4 à 10, **caractérisé en ce que** l'extrémité libre de la tige de piston (22) du moteur à agent de pression (21) est accouplée à la partie de maintien (13) par un accouplement à fente (23 )et pivot.

12. Dispositif selon la revendication 11, **caractérisé en ce que** le vérin (21) est conçu exclusivement pour élever ou abaisser la partie de maintien (13) par rapport au support (6).

13. Dispositif selon une des revendications 4 à 12, **caractérisé en ce qu'**il est prévu un autre moteur à agent de pression (25) qui s'appuie sur la partie basculante (28) et qui est accouplé à la partie de maintien (13).

14. Dispositif selon la revendication 13, **caractérisé en ce que** le second vérin (25) est, dans la zone de sa tige de piston, accouplé à la partie de maintien (13) par un accouplement à pivot et fente (26).

15. Dispositif selon la revendication 13 ou 14, **caractérisé en ce que** le second vérin (25) est conçu exclusivement pour charger la partie de maintien (13) vers le bas.

16. Dispositif selon une des revendications 4 à 15, **caractérisé en ce que** les galets de roulement (15) sont montés sur la partie de maintien (13) de manière à pouvoir rouler devant et derrière la lame (2).

17. Dispositif selon une des revendications 4 à 16, **caractérisé en ce qu'**il est prévu une règle de mesure (40) comme dispositif de mesure entre les supports (6) et la partie de maintien (13).

18. Dispositif selon la revendication 17, **caractérisé en ce que** la règle de mesure (40) s'appuie par une extrémité sur la partie basculante (28) de la partie de maintien (6) et par son autre extrémité sur la partie de maintien (13).

19. Dispositif selon la revendication 18, **caractérisé en ce qu'**une extrémité de la règle de mesure (40) est accouplée à un des bras de parallélogramme (10, 11).

20. Dispositif selon une des revendications 4 à 19, **caractérisé en ce que** la lame (2) est une lame circulaire.

21. Dispositif selon une des revendications 4 à 20, **caractérisé en ce que** la lame (2) est fixée par un bloc de serrage (14) sur la partie de maintient (13).

22. Dispositif selon une des revendications 11 à 21, **caractérisé en ce que** la partie de maintien (13), dans la position active de la lame (2), peut se déplacer librement par rapport au vérin (21) servant à élever ou à abaisser la partie de maintien (13), la broche transversale située à l'extrémité de la tige de piston (22) étant montée dans la partie de maintien (13) en étant espacée des deux extrémités de la fente (23).
